# EUROPÄISCHE PATENTSCHRIFT

(11) **EP 3 148 860 B1**
(45) Veröffentlichungstag und Bekanntmachung des Hinweises auf die Patenterteilung: **20.02.2019**
(21) Anmeldenummer: 15715756.1
(22) Anmeldetag: 16.04.2015
(51) Int. Cl.: B62D 5/04, F16H 57/00

(54) **LENKWELLE FÜR EINE KRAFTFAHRZEUGLENKUNG**
STEERING SHAFT FOR A MOTOR VEHICLE STEERING SYSTEM
ARBRE DE DIRECTION D'UN VÉHICULE AUTOMOBILE

(30) Priorität: 06.05.2014 DE 102014106259
(43) Veröffentlichungstag der Anmeldung: 05.04.2017
(73) Patentinhaber: ThyssenKrupp Presta AG, 9492 Eschen (LI); thyssenkrupp AG, 45143 Essen (DE)
(72) Erfinder: SCHLEGEL, Ueli, 7304 Maienfeld (CH); RENGGLI, Patrick, 8006 Zürich (CH)
(74) Vertreter: thyssenkrupp Intellectual Property GmbH
(86) Internationale Anmeldenummer: PCT/EP2015/058236
(87) Internationale Veröffentlichungsnummer: WO 2015/169556

(56) Entgegenhaltungen:
- EP-A1- 1 845 009
- EP-A1- 1 953 417
- WO-A1-2010/109232
- WO-A1-2013/084613
- DE-A1-102008 000 648
- DE-A1-102008 043 214
- DE-A1-102012 101 383
- US-A1- 2013 000 435

## Beschreibung

### Technisches Gebiet

Die vorliegende Erfindung betrifft eine Lenkwelle für eine Kraftfahrzeuglenkung zur Verwendung mit einer Hilfskraftunterstützung, insbesondere zur Verwendung mit einer elektrischen oder elektromechanischen Hilfskraftunterstützung.

### Stand der Technik

Lenkwellen für Kraftfahrzeuglenkungen zur Verwendung mit elektrischen oder elektromechanischen Hilfskraftunterstützungen sind prinzipiell bekannt. Die Lenkwellen weisen eine Eingangswelle auf, welche mit dem Lenkrad verbunden ist, über welches der Fahrer des Kraftfahrzeugs ein Lenkmoment als Lenkbefehl in die Kraftfahrzeuglenkung einbringt. Eine mit der Eingangswelle verbundene Ausgangswelle ist vorgesehen, über welche das Lenkmoment über Spurstangen an die jeweils zu lenkenden Räder übertragen wird. Um die jeweils benötigte Unterstützungskraft einer an die Ausgangswelle angebundenen elektrischen oder elektromechanischen Hilfskraftunterstützung bestimmen zu können, sind die Eingangswelle und die Ausgangswelle üblicherweise über einen Drehstab elastisch miteinander verbunden, und über die Bestimmung einer Relativverdrehung zwischen der Eingangswelle und der Ausgangswelle kann das vom Fahrer in die Eingangswelle eingebrachte Drehmoment bestimmt werden.

Das so bestimmte Drehmoment kann die Grundlage für die Bestimmung eines in das Lenksystem einzubringenden Hilfsdrehmomentes beziehungsweise einer Hilfskraft einer Hilfskraftunterstützung zur Lenkunterstützung des Fahrers darstellen.

Hilfskraftunterstützungen, beispielsweise elektrische Hilfskraftunterstützungen oder elektromechanische Hilfskraftunterstützungen, werden zum Eintragen der entsprechenden Hilfsdrehmomente üblicherweise an der Ausgangswelle, am Lenkritzel oder an der Zahnstange angesetzt. Die jeweilige Hilfskraftunterstützung wird dabei über die Bestimmung des vom Fahrer über das Lenkrad in die Eingangswelle eingetragenen Drehmoments bezüglich der Ausgangswelle angesteuert.

Hierbei ist es bekannt, die Eingangswelle und die Ausgangswelle einer Lenkwelle mittels eines Drehstabes, welcher auch als Torsionsstab oder "*Torsion Bar*" bezeichnet wird, zu verbinden und über einen Drehmomentsensor das Eingangsdrehmoment aus dem relativen Verdrehwinkel zwischen der Eingangswelle und der Ausgangswelle zu bestimmen. Bei einer hydraulischen Servolenkung kann dies beispielsweise über ein Drehschieberventil stattfinden und bei einer elektromechanischen Servolenkung beispielsweise über entsprechende Magnetsensoren.

Um eine Überlastung des Drehstabes zu verhindern, können die Eingangswelle und die Ausgangswelle über einen losen Formschluss miteinander verbunden oder gekoppelt sein, derart, dass ein direktes formschlüssiges Eingreifen der Eingangswelle mit der Ausgangswelle beim Überschreiten eines Maximalwerts für die elastische Verdrehung des Drehstabes auftritt.

Die Hilfskraft wird dann beispielsweise über ein mit der Ausgangswelle drehfest verbundenes Schneckenrad, auf welches eine Schneckenabtriebswelle eines Elektromotors zum Einbringen des jeweiligen Hilfslenkmoments wirkt, in die Ausgangswelle eingebracht.

Um einen reibungsarmen Betrieb der Antriebsschnecke auf dem Schneckenrad zu ermöglichen, ist die Schneckenradverzahnung des Schneckenrads bevorzugt aus einem Kunststoffmaterial hergestellt. Auf diese Weise kann auch eine Geräuschbelastung durch die Hilfskraftunterstützung reduziert werden.

Aus der DE 10 2012 101 383 A1 ist eine Ausgangswelle mit einem Schneckenrad bekannt, wobei eine Stahlinnenhülse auf die Ausgangswelle aufgebracht ist und die Schneckenradverzahnung auf diese Stahlinnenhülse aufgespritzt ist. Durch die Mehrkomponentenbauweise ist der Aufbau aufwändig.

Aus der DE 10 2008 043 214 A1 ist ein Schneckenrad bekannt, welches direkt auf die Ausgangswelle aufgespritzt ist. Da Kunststoff jedoch eine geringere Festigkeit als Stahl aufweist, baut dieses Schneckenrad in Axialrichtung relativ breit.

Aus der gattungsgemässen EP 1 845 009 A1 ist eine Ausgangswelle mit einem Schneckenrad mit einem Träger bekannt, der einstückig mit der Ausgangswelle ausgebildet ist.

### Darstellung der Erfindung

Ausgehend von dem bekannten Stand der Technik ist es entsprechend eine Aufgabe der vorliegenden Erfindung, eine Lenkwelle für ein Kraftfahrzeug zum Einsatz mit einer Hilfskraftunterstützung bereitzustellen, welche einen verringerten Bauraum und einen einfacheren Aufbau ermöglicht.

Diese Aufgabe wird durch eine Lenkwelle mit den Merkmalen des Anspruchs 1 gelöst. Vorteilhafte Weiterbildungen ergeben sich aus den Unteransprüchen.

Entsprechend wird eine Lenkwelle für eine Kraftfahrzeuglenkung zur Verwendung mit einer Hilfskraftunterstützung, umfassend eine Ausgangswelle und einen mit der Ausgangswelle drehfest verbundenen Träger vorgeschlagen, auf dessen radial äußerem Bereich eine Schneckenradverzahnung aus Kunststoff zur Ausbildung eines Schneckenrades zur Anbindung an die Hilfskraftunterstützung vorgesehen ist, wobei der Träger einstückig mit der Ausgangswelle ausgebildet ist. Erfindungsgemäß weist die Ausgangswelle eine Verzahnung zum Eingriff in eine korrespondierende Verzahnung einer Zahnstange aufweist. Als Hilfskraftunterstützung im Sinne der Erfindung ist sowohl eine Einrichtung, die einfach eine zusätzliche Unterstützungskraft oder ein zusätzliches Unterstützungsdrehmoment zur Reduzierung der Handkraft oder des Hand-Drehmoments des Fahrers in das Lenksystem einleitet, als auch eine Einrichtung, die einen Zusatzlenkwinkel zu dem vom Fahrer eingeleiteten Lenkwinkel in das Lenksystem einleitet, oder auch eine Kombination von beidem, zu verstehen.

Die erfindungsgemässe Verzahnung der Ausgangswelle greift in eine korrespondierende Verzahnung einer Zahnstange ein und leitet direkt die zuvor über den Träger eingetragene Hilfskraft bzw. Hilfsdrehmoment auf die Zahnstange weiter. So kann hier mit einem einzigen Umformvorgang die Ausgangswelle zusammen mit dem Träger ausgeformt werden und anschließend die Verzahnung auf einen entsprechenden Schaftbereich der Ausgangswelle eingebracht werden.

Dadurch, dass der Träger einstückig mit der Ausgangswelle ausgebildet ist, kann auf eine mehrkomponentige Ausbildung der Ausgangswelle verzichtet werden. Der Träger und die Ausgangswelle können vielmehr in einem einzigen Schritt gemeinsam hergestellt werden, beispielsweise durch Umformen, bevorzugt durch Kaltfließpressen. Die Festigkeit des Trägers mit der Ausgangswelle ist entsprechend besonders hoch und es kann auf den Einsatz weiterer Komponenten zur Darstellung des Trägers beziehungsweise zur Darstellung des Schneckenrades verzichtet werden.

Durch das direkte Aufbringen der Schneckenradverzahnung aus Kunststoff auf den radial äußeren Bereich des Trägers kann weiterhin der Bauraum verringert werden, da zumindest im achsnahen Bereich der Ausgangswelle der Träger nicht mit einer Kunststoffummantelung versehen ist. Der Träger ist aus dem gleichen Material ausgebildet, wie die Ausgangswelle selbst, also beispielsweise aus Stahl. Entsprechend kann im achsnahen Bereich durch die einstückige Ausbildung des Trägers mit der Ausgangswelle der Träger mit einer Breite ausgeführt werden, die in Axialrichtung deutlich kleiner ist, als dies bei einer Ausbildung mittels eines Kunststoffes möglich wäre. Dies ist der höheren Festigkeit von Stahl gegenüber Kunststoff geschuldet.

Der Träger ist bevorzugt scheibenförmig ausgebildet und weist insbesondere ein Verhältnis von Höhe h1 des Trägers über der Ausgangswelle zu dessen Breite von ≥ 1 auf. Besonders bevorzugt ist das Verhältnis der Höhe h1 des Trägers über der Ausgangswelle zu dessen Breite b größer oder gleich 2, wobei besonders zu bevorzugen ist, dass das Verhältnis kleiner oder gleich 4 ist. Mit anderen Worten hat der Träger eine radiale Ausprägung beziehungsweise eine Höhe über der Außenoberfläche der Ausgangswelle bis zu seinem maximalen Radius, welcher deutlich größer ist, als dessen Breite. Es handelt sich entsprechend um einen im Wesentlichen scheibenförmigen Träger, der entsprechend schmal baut.

Die Schneckenradverzahnung ist bevorzugt im radial äußeren Bereich des Trägers aufgebracht, derart, dass die Schneckenradverzahnung den Träger nur so weit umschließt, wie es für die Festigkeit erforderlich ist. Entsprechend kann ein zwischen Ausgangswelle und Schneckenradverzahnung angeordneter Bereich des Trägers freigelassen werden, um insgesamt den Bauraum zu verringern und den durch die Aufbringung der Schneckenradverzahnung verbrauchten Platz zu reduzieren.

Im Außenbereich des Trägers, in welchem die Schneckenradverzahnung aufgebracht wird, weist der Träger bevorzugt eine Verzahnung, eine Rändelung, zur Wellenachse parallele Bohrungen bzw. Durchdringungen oder andere Formschlussstrukturen auf, welche eine formschlüssige Verbindung der Schneckenradverzahnung mit dem Träger in Rotationsrichtung ermöglichen. Entsprechend kann sichergestellt werden, dass die Schneckenradverzahnung auch beim Eintragen einer Hilfskraft bzw. eines Hilfsdrehmonents gegenüber dem Träger nicht verrutscht beziehungsweise nicht verdreht wird, so dass ein exaktes Eintragen der Hilfskraft bzw. des Hilfsdrehmoments in den Lenkstrang ermöglicht wird.

Die Schneckenradverzahnung ist bevorzugt aus einem einzigen Kunststoff hergestellt, so dass auch hier auf mehrkomponentige Strukturen verzichtet werden kann, um die Lenkwelle kostengünstig herstellen zu können.

Bevorzugt ist die Schneckenradverzahnung auf den radial äußeren Bereich des Trägers aufgespritzt, aufgegossen und/oder geklebt, um eine einfache und kostengünstige Herstellbarkeit zu erreichen.

Der von der Schneckenradverzahnung umschlossene Bereich des Trägers ist bevorzugt kleiner, als der nicht umschlossene. Insbesondere ist der von der Schneckenradverzahnung umschlossene Bundbereich h1 - h2 kleiner als der nicht umschlossene Bundbereich h2, wodurch, wie bereits oben ausgeführt, ein größerer Bereich in Radialrichtung des Trägers ohne die Schneckenradverzahnung ausgebildet ist und entsprechend der Bauraum reduziert sein kann. Insbesondere umfasst die Erfindung ein Lenksystem für ein Kraftfahrzeug, umfassend einen elektrischen Servomotor mit einer Ausgangswelle, mit der eine Schnecke drehbar gekoppelt ist und ein Schneckenrad, das drehfest gekoppelt ist mit einer Lenkwelle und in Eingriff mit der Schnecke ein Getriebe bildet, wobei der elektrische Servomotor eine Hilfskraft oder ein Hilfsdrehmoment zur Unterstützung der Lenkbewegung über das Getriebe aus Schnecke und Schneckenrad in die Lenkwelle einleitet, dadurch gekennzeichnet, dass die Lenkwelle entsprechend einzelnen oder mehreren der vorhergenannten Merkmale ausgebildet ist.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Darstellung eines Lenksystems eines Kraftfahrzeugs mit einer Hilfskraftunterstützung;
- Figur 2: eine schematische perspektivische Darstellung einer nicht erfindungsgemäßen Ausgangswelle mit einem Schneckenrad;
- Figur 3: eine schematische perspektivische Darstellung einer nicht erfindungsgemäßen Ausgangswelle mit einem einstückig mit dieser ausgebildeten Träger;
- Figur 4: eine schematische Schnittdarstellung einer nicht erfindungsgemäßen Ausgangswelle mit einem auf den in der Figur 3 gezeigten Träger aufgebrachten Schneckenrad;
- Figur 5: eine schematische Schnittdarstellung senkrecht zur Achsenrichtung des Schneckenrads aus Figur 4;
- Figur 6: eine nicht erfindungemäße Ausgangswelle mit einem einstückig damit ausgebildeten Träger in einem weiteren Ausführungsbeispiel;
- Figur 7: eine schematische Schnittdarstellung durch die Ausgangswelle der Figur 6 mit aufgebrachter Schneckenradverzahnung; und
- Figur 8: eine schematische perspektivische Darstellung einer nicht erfindungsgemäßen Ausgangswelle in einem weiteren Ausführungsbeispiel; und
- Figur 9: eine schematische perspektivische Darstellung einer erfindungsgemäßen Ausgangswelle in einem weiteren Ausführungsbeispiel; und
- Figur 10: eine schematische perspektivische Darstellung einer elektrischen Hilfskrafteinrichtung entsprechend der Erfindung.

### Detaillierte Beschreibung bevorzugter Ausführungsbeispiele

Im Folgenden werden Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

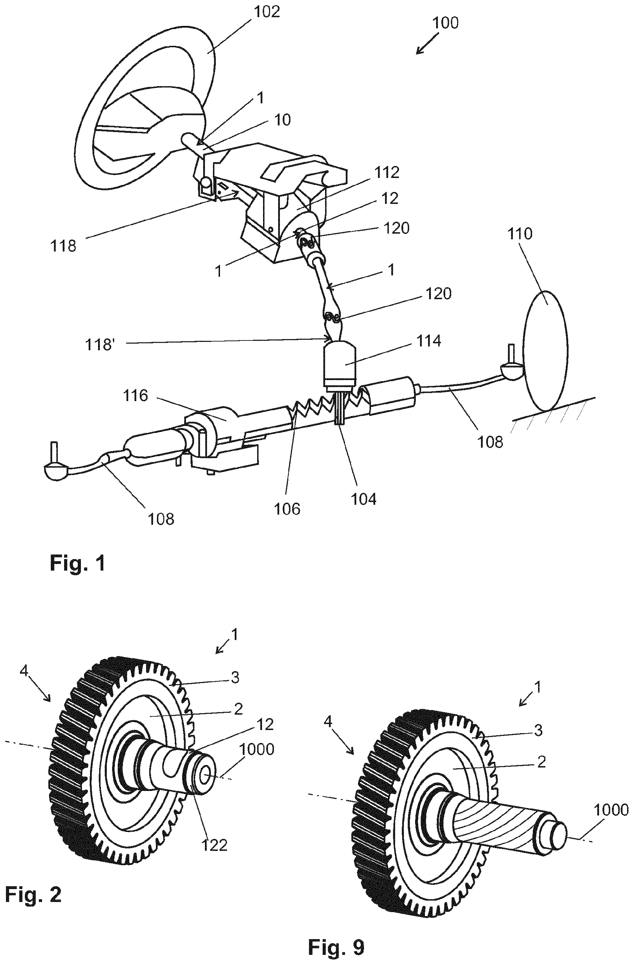

In Figur 1 ist eine schematische Darstellung einer Kraftfahrzeuglenkung 100 gezeigt, wobei ein Fahrer über ein Lenkrad 102 ein entsprechendes Drehmoment als Lenkbefehl in eine Lenkwelle 1 einbringen kann. Das Drehmoment wird dann über die Lenkwelle 1 auf ein Lenkritzel 104 übertragen, welches mit einer Zahnstange 106 kämmt, die dann ihrerseits über entsprechende Spurstangen 108 den vorgegebenen Lenkwinkel auf die lenkbaren Räder 110 des Kraftfahrzeugs überträgt.

Eine elektrische und/oder hydraulische Hilfskraftunterstützung kann in Form der mit der Lenkwelle 1 gekoppelten Hilfskraftunterstützung 112, der mit dem Ritzel 104 gekoppelten Hilfskraftunterstützung 114 und/oder der mit der Zahnstange 106 gekoppelten Hilfskraftunterstützung 116 vorgesehen sein. Die jeweilige Hilfskraftunterstützung 112, 114 oder 116 trägt ein Hilfsdrehmoment in die Lenkwelle 1, das Lenkritzel 104 und/oder eine Hilfskraft in die Zahnstange 106 ein, wodurch der Fahrer bei der Lenkarbeit unterstützt wird. Die drei unterschiedlichen in der Figur 1 dargestellten Hilfskraftunterstützungen 112, 114 und 116 zeigen mögliche Positionen für deren Anordnung.

Üblicherweise ist nur eine einzige der gezeigten Positionen mit einer Hilfskraftunterstützung belegt. Das Hilfsdrehmoment oder die Hilfskraft, welches beziehungsweise welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten Eingangsdrehmoments bestimmt. Alternativ oder in Kombination mit der Einbringung des Hilfsdrehmomentes beziehungsweise der Hilfskraft kann mit der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 weist eine mit dem Lenkrad 102 verbundene Eingangswelle 10 und eine mit der Zahnstage 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab miteinander gekoppelt. Damit führt ein von einem Fahrer über das Lenkrad 102 in die Eingangswelle 10 eingetragenes Drehmoment immer dann zu einer Relativdrehung der Eingangswelle 10 bezüglich der Ausgangswelle 12, wenn die Ausgangswelle 12 sich nicht exakt synchron zu der Eingangswelle 10 dreht. Diese Relativdrehung zwischen Eingangswelle 10 und Ausgangswelle 12 kann beispielsweise über einen Drehwinkelsensor gemessen werden und entsprechend aufgrund der bekannten Torsionssteifigkeit des Drehstabes ein entsprechendes Eingangsdrehmoment relativ zur Ausgangswelle bestimmt werden. Auf diese Weise wird durch die Bestimmung der Relativdrehung zwischen Eingangswelle 10 und Ausgangswelle 12 der Drehmomentsensor 118 ausgebildet. Ein solcher Drehmomentsensor 118 ist prinzipiell bekannt und kann beispielsweise in Form eines Drehschiebeventils, einer elektromagnetischen oder anderen Messung der Relativverdrehung realisiert werden.

Entsprechend wird ein Drehmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 hervorrufen, wenn die Ausgangswelle 12 gegen den Drehwiderstand des Drehstabs relativ zu der Eingangswelle 10 verdreht wird.

Der Drehmomentsensor 118 kann auch alternativ an der Position 118' angeordnet sein, wobei dann die Durchbrechung der Lenkwelle 1 in Eingangswelle 10 und Ausgangswelle 12 und die drehelastische Kopplung über den Drehstab entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder eine einzutragende Hilfskraft bestimmen zu können.

Die Lenkwelle 1 in der Figur 1 umfasst weiterhin mindestens ein kardanisches Gelenk 120, mittels welchem der Verlauf der Lenkwelle 1 im Kraftfahrzeug an die räumlichen Gegebenheiten angepasst werden kann.

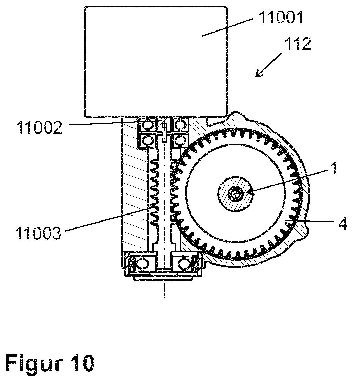

In Figur 10 ist eine Ausführungsform für eine erfindungsgemäße Hilfskraftunterstützungseinrichtung dargestellt. Das Lenksystem für ein Kraftfahrzeug umfasst einen elektrischen Servomotor 11001 mit einer Ausgangswelle 11002, mit der eine Schnecke 11003 drehbar gekoppelt ist und ein Schneckenrad 4, das drehfest gekoppelt ist mit einer Lenkwelle 1 und in Eingriff mit der Schnecke 11003 ein Getriebe bildet, wobei der elektrische Servomotor 11001 eine Hilfskraft oder ein Hilfsdrehmoment zur Unterstützung der Lenkbewegung über das Getriebe aus Schnecke 11003 und Schneckenrad 4 in die Lenkwelle 1 einleitet. Die Lenkwelle 1 ist in den Figuren 2 bis 8 in verschiedenen Ausführungsformen veranschaulicht und wird weiter unten beschrieben.

In Figur 2 ist schematisch eine Lenkwelle 1 in einer perspektivischen Darstellung gezeigt. Die Lenkwelle 1 ist hier in Form der nicht erfindungsgemäßen Ausgangswelle 12 gezeigt, wobei hier das abtriebsseitige Ende 122 gezeigt ist, welches beispielsweise mit dem in Figur 1 gezeigten Kardangelenk 120 in Eingriff kommt und entsprechend das Lenkmoment auf die nachfolgenden Bereiche des Lenksystems überträgt. Ein Träger 2 ist vorgesehen, welcher auf der Ausgangswelle 12 drehfest angeordnet ist und auf welchem eine Schneckenradverzahnung 3 angeordnet ist. Mittels der Schneckenradverzahnung 3 kann über eine entsprechende Antriebsschnecke die jeweilige Hilfskraft über den Träger 2 auf die Ausgangswelle 12 übertragen werden. Die Schneckenradverzahnung 3 bildet zusammen mit dem Träger 2 ein Schneckenrad 4 aus, welches drehfest mit der Ausgangswelle 2 verbunden ist und entsprechend zum Eintrag des jeweiligen Zusatzlenkmoments geeignet ist.

Der Träger 2 definiert in Kombination mit der Schneckenradverzahnung 3 ein Schneckenrad 4. Auf das Schneckenrad 4 kann entsprechend ein Abtrieb eines Elektromotors beziehungsweise Servomotors der Hilfskraftunterstützung 112 wirken. In einer Alternative kann auch ein hydraulischer Antrieb vorgesehen sein. Die Hilfskraftunterstützung 112 dient daher dazu, das über den Drehmomentsensor 118 ermittelte Hilfsdrehmoment zur Lenkunterstützung des Fahrers in die Ausgangswelle 12 und damit in sämtliche stromabwärts der Ausgangswelle 12 liegenden Komponenten der Kraftfahrzeuglenkung 100 einzutragen.

Um das Drehmoment beziehungsweise den Betrag der über das Schneckenrad 4 einzubringenden Hilfskraft genau bestimmen zu können, sind, wie bereits oben beschrieben, die Eingangswelle 10 und die Ausgangswelle 12 drehelastisch miteinander verbunden, so dass der jeweilige Lenkbefehl, welcher vom Fahrer über das Lenkrad 102 in die Eingangswelle 10 eingetragen wird, in einer Unterstützung des Fahrers durch die Hilfskraftunterstützung 112, welche auf das Schneckenrad 4 und damit auf die Lenkwelle 1 wirkt, resultiert. Hierzu ist der Drehmomentsensor 118 vorgesehen, welcher die Relativdrehung zwischen der Eingangswelle 10 und der Ausgangswelle 12 beziehungsweise den entsprechenden Relativdrehwinkel zwischen Eingangswelle 10 und Ausgangswelle 12 bestimmt und auf dieser Grundlage das von der Hilfskraftunterstützung 112 bereit zu stellende Hilfsdrehmoment bestimmt werden kann.

Der Träger 2 ist einteilig mit der Ausgangswelle 12 ausgebildet. Diese einteilige Ausbildung kann beispielsweise durch gemeinsames Umformen, bevorzugt durch Kaltfließpressen eines entsprechenden Halbzeugs hergestellt werden, dessen Durchmesser kleiner als der Außendurchmesser des schlussendlich erzeugten Trägers 2 ist.

Die Schneckenradverzahnung 3 aus Kunststoff ist bevorzugt auf dem Träger 2 in dessen radialem Umfangsbereich aufgespritzt, kann aber auch gegossen oder angeklebt sein, beispielsweise durch Verbinden zweier separater Schalen durch Verkleben.

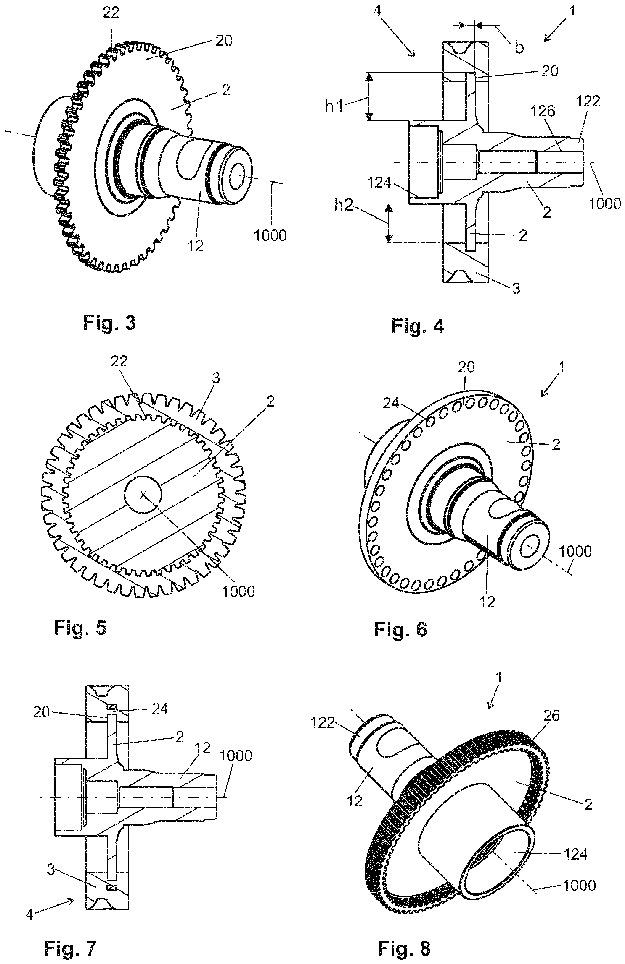

Die Ausgangswelle 12 in Kombination mit dem Träger 2 ist in Figur 3 noch einmal in einer schematischen perspektivischen Darstellung gezeigt. Es ist zu erkennen, dass der Träger in seinem radialen äußeren Bereich 20 eine Verzahnung 22 aufweist, welche dazu dient, mit der aufgebrachten Schneckenradverzahnung 3 formschlüssig in Eingriff zu kommen. Entsprechend kann zumindest in Rotationsrichtung bei einer Rotation des dann ausgebildeten Schneckenrades um die Wellenachse 1000 herum ein Verrutschen der Schneckenradverzahnung gegenüber dem Träger und damit gegenüber der Ausgangswelle 12 vermieden werden. Damit kann auch beim Eintragen höherer Drehmomente beziehungsweise höherer Hilfskräfte über die Hilfskraftunterstützung erreicht werden, dass eine sichere Übertragung der jeweiligen Kräfte erreicht wird.

In Figur 4 ist eine schematische Schnittdarstellung in einer durch die Wellenachse 1000 hindurchgehenden Ebene durch die Lenkwelle 1 gezeigt. Es ist unmittelbar zu erkennen, dass die Außenwelle 12 einstückig mit dem Träger 2 ausgebildet ist, insbesondere durch einen Umformungsprozess. Das abtriebsseitige Ende 122 und das antriebsseitige Ende 124, welches auch eine Aufnahme 126 für einen hier nicht gezeigten Drehstab aufweist, sind ebenfalls einstückig in der Ausgangswelle 12 eingeformt.

Der Träger 2 ist, wie aus der Schnittdarstellung in Figur 4 sofort zu erkennen, im Wesentlichen scheibenförmig ausgebildet. Dies bedeutet unter anderem, dass die Höhe h1 über der Oberfläche der Ausgangswelle 12 zum radial äußersten Bereich des Trägers 2 deutlich größer ist als die Breite b des Trägers 2. Dies kann auch so ausgedrückt werden: h1/b ≥ 1. Mit anderen Worten ist der Träger 2 scheibenförmig ausgebildet und steht entsprechend ein deutliches Stück über die Ausgangswelle 12 hinaus.

Die Schneckenradverzahnung 3 ist nicht nur um den äußersten Umfang des Trägers 2 aufgebracht, sondern umfasst beziehungsweise ummantelt den radial äußeren Bereich 20 des Trägers 2. Die Höhe h2 zwischen der äußeren Oberfläche der Ausgangswelle 12 und der radial innersten Ausprägung der Schneckenradverzahnung 3 ist entsprechend kleiner als die Gesamthöhe h1 des Trägers 2.

Der von der Schneckenradverzahnung 3 umschlossene radial äußere Bereich 20 des Trägers 2, also h1 - h2 ist bevorzugt deutlich kleiner als der nicht von der Schneckenradverzahnung 3 umschlossene Bereich h2 des Trägers 2. Mit anderen Worten ist die Höhe (h1-h2) der Umfassung des radialen äußeren Bereichs 20 nur relativ klein im Vergleich zur freien Höhe h2 des Trägers 2.

Auf diese Weise kann in dem Bereich über die Höhe h2 hinweg, in welchem lediglich die Breite b des Trägers 2 in Richtung der Wellenachse 1000 vorliegt, entsprechend Bauraum eingespart werden, so dass das durch das Schneckenrad 4 eingenommene Bauraumvolumen möglichst gering ausgebildet sein kann.

Durch die einteilige Ausprägung des Trägers 2 mit der Ausgangswelle 12 kann weiterhin eine hohe Festigkeit zwischen Träger 2 und Ausgangswelle 12 hergestellt sein, so dass eine sichere Übertragung von über die Hilfskraftunterstützung eingetragenen Drehmomenten sichergestellt ist.

In Figur 5 ist eine Schnittdarstellung durch die Ebene des scheibenförmigen Trägers 2 gezeigt. Der scheibenförmige Träger 2 weist, wie bereits beschrieben, an seinem äußeren Umfang eine Verzahnung 22 auf, welche, wie sich besonders gut aus Figur 5 erkennen lässt, formschlüssig im Eingriff steht mit der Schneckenradverzahnung 3. Entsprechend kann zumindest in Rotationsrichtung ein Formschluss bereitgestellt werden, welcher für eine sichere Übertragung des Drehmoments von der Schneckenradverzahnung 3 auf den Träger 2 und entsprechend auf die Ausgangswelle 12 ermöglicht.

In Figur 6 ist schematisch eine weitere Ausbildung der Lenkwelle 1 gezeigt, wobei die nicht erfindungsgemäße Ausgangswelle 12 hier wiederum einstückig mit dem Träger 2 ausgebildet ist. Im radial äußeren Bereich 20 des Trägers 2 sind hier sich parallel zur Wellenachse 1000 erstreckende Bohrungen 24 vorgesehen, welche ebenfalls dazu dienen, die Schneckenradverzahnung formschlüssig mit dem Träger 2 zu verbinden.

Dies ist in Figur 7 in einer schematischen Schnittdarstellung in einer durch die Wellenachse 1000 hindurchgelegten Ebene zu erkennen. Die Schneckenradverzahnung 3 erstreckt sich entsprechend durch die Bohrungen 24 hindurch. Dies kann dadurch erreicht werden, dass die Schneckenradverzahnung 3 auf den radial äußeren Bereich 20 des Trägers 2 aufgespritzt wird, derart, dass das Kunststoffmaterial der Schneckenradverzahnung 3 durch die Bohrungen 24 hindurchfließt und entsprechend eine formschlüssige Verbindung der Schneckenradverzahnung 3 mit dem Träger 2 bereitstellt.

In Figur 8 ist eine weitere schematische perspektivische Darstellung einer Lenkwelle 1 mit einer nicht erfindungsgemäßen.

Ausgangswelle 12 gezeigt. Hier ist ein während des Fließpressens zur Wellenachse 1000 parallel ausgeprägter Kranz 26 mit einer inneren und einer äußeren Verzahnung dargestellt, mittels welchem eine formschlüssige Verbindung zwischen Träger 2 und Schneckenradverzahnung 3 erhalten werden kann, wobei die Schneckenradverzahnung 3 aufgrund der verbreiterten Struktur des Kranzes 26 unter Ausnutzung dessen hoher Festigkeit nochmals kompakter ausgeführt und somit zusätzlich Bauraum eingespart werden kann..

Auch hier ist die Schneckenradverzahnung 3 wiederum breiter als die Breite b des Trägers in Richtung der Wellenachse 1000. Entsprechend kann auch auf diese Weise eine besonders kompakte Ausgangswelle 12 bereitgestellt werden, welche entsprechend zumindest im Bereich des Bauraumes um die Ausgangswelle 12 herum, in welcher der Träger 2 eine freie Höhe h2 aufweist, ein besonders geringes Bauvolumen vorgesehen ist.

Entsprechend kann durch die vorbeschriebene Ausbildung des Schneckenrades 5 eine kompakte und platzsparende Bauweise erreicht werden, wobei gleichzeitig die Anzahl der benötigten Bauteile reduziert wird und eine erhöhte Festigkeit des Schneckenrades 4 erreicht werden kann.

Das abtriebsseitige Ende 122 der Ausgangswelle 12 stellt eine formschlüssige Schnittstelle zur jeweiligen Gelenkwelle, beispielsweise über das Kardangelenk 120, bereit. Das antriebsseitige Ende 124 stellt ebenfalls eine kraft- oder formschlüssige Schnittstelle zum Drehstab hin bereit.

In Figur 9 wird eine erfindungsgemäße Ausführung veranschaulicht, bei der die Ausgangswelle 12 eine Verzahnung aufweist, die in eine korrespondierende Verzahnung einer Zahnstange 106 eingreift und somit direkt die zuvor über den Träger 2 eingetragene Hilfskraft bzw. das Hilfsdrehmoment auf die Zahnstange 106 weiterleitet. Dabei kann auch hier in diesem Beispiel mit einem einzigen Umformvorgang die Ausgangswelle zusammen mit dem Träger ausgeformt werden, wobei anschließend die Verzahnung auf einen entsprechenden Schaftbereich der Ausgangswelle aufgebracht werden kann.

### Bezuqszeichenliste

- 1: Lenkwelle
- 10: Eingangswelle
- 12: Ausgangswelle
- 100: Kraftfahrzeuglenkung
- 102: Lenkrad
- 104: Lenkritzel
- 106: Zahnstange
- 108: Spurstange
- 110: lenkbares Rad
- 112: Hilfskraftunterstützung
- 114: Hilfskraftunterstützung
- 116: Hilfskraftunterstützung
- 11001: Servomotor
- 11002: Ausgangswelle
- 11003: Schnecke
- 118: Drehmomentsensor
- 118': Drehmomentsensor
- 120: kardanisches Gelenk
- 122: abtriebsseitiges Ende
- 124: antriebsseitiges Ende
- 126: Aufnahme für Drehstab
- 1000: Wellenachse
- 2: Träger
- 20: radial äußerer Bereich
- 22: Verzahnung
- 24: Bohrung
- 26: Kranz
- 3: Schneckenradverzahnung
- 4: Schneckenrad
- h1: Höhe des Trägers über der Ausgangswelle
- h2: Abstand zwischen Ausgangswelle und Schneckenradverzahnung
- b: Breite des Trägers

## Patentansprüche

1. Lenkwelle (1) für eine Kraftfahrzeuglenkung zur Verwendung mit einer Hilfskraftunterstützung (112, 114, 116), umfassend eine Ausgangswelle (12) und einen mit der Ausgangswelle (12) drehfest verbundenen Träger (2), auf dessen radial äußerem Bereich (20) eine Schneckenradverzahnung (3) aus Kunststoff zur Ausbildung eines Schneckenrades (4) zur Anbindung an die Hilfskraftunterstützung (112, 114, 116) vorgesehen ist, und der einstückig mit der Ausgangswelle (12) ausgebildet ist,
**dadurch gekennzeichnet, dass**
die Ausgangswelle (12) eine Verzahnung zum Eingriff in eine korrespondierende Verzahnung einer Zahnstange (106) aufweist.

2. Lenkwelle (1) gemäß Anspruch 1, **dadurch gekennzeichnet, dass** die Ausgangswelle (12) und der Träger (2) gemeinsam durch Umformen oder Kaltfließpressen hergestellt sind.

3. Lenkwelle (1) gemäß Anspruch 1 oder 2, **dadurch gekennzeichnet, dass** der Träger (2) scheibenförmig ausgebildet ist das Verhältnis der Höhe (h1) des Trägers (2) über der Ausgangswelle (2) zu der Breite (b) des Trägers (2) größer gleich eins ist.

4. Lenkwelle (1) gemäß einem der vorstehenden Ansprüche, **dadurch gekennzeichnet, dass** der radial äußere Bereich (20) des Trägers (2) eine Verzahnung (22), eine Rändelung, zur Wellenachse parallele Bohrungen (24) und/oder andere Formschlussstrukturen aufweist, welche zur Ausbildung einer formschlüssigen Verbindung mit der Schneckenradverzahnung (3) ausgebildet sind.

5. Lenkwelle (1) gemäß einem der vorstehenden Ansprüche, **dadurch gekennzeichnet, dass** die Schneckenradverzahnung (3) auf den radial äußeren Bereich (20) des Trägers (2) aufgespritzt, aufgegossen und/oder geklebt ist.

6. Lenkwelle (1) gemäß einem der vorstehenden Ansprüche, **dadurch gekennzeichnet, dass** die Höhe (h1-h2) des von der Schneckenradverzahnung (3) umschlossenen radialen äußeren Bereichs (20) des Trägers (2) kleiner ist, als die Höhe (h2) des nicht von der Schneckenradverzahnung (3) umschlossenen Bereichs des Trägers (2).

7. Lenkwelle (1) gemäß einem der vorstehenden Ansprüche, **dadurch gekennzeichnet, dass** in der Ausgangswelle (12) eine kraft- und/oder formschlüssige Schnittstelle zur Anbindung an die jeweiligen Gelenkwelle (120) einstückig eingeformt ist.

8. Lenksystem für ein Kraftfahrzeug umfassend, einen elektrischen Servomotor (11001) mit einer Ausgangswelle (11002), mit der eine Schnecke (11003) drehbar gekoppelt ist und ein Schneckenrad (4), das drehfest gekoppelt ist mit einer Lenkwelle (1) und in Eingriff mit der Schnecke (11003) ein Getriebe bildet, wobei der elektrische Servomotor (11001) eine Hilfskraft oder ein Hilfsdrehmoment zur Unterstützung der Lenkbewegung über das Getriebe aus Schnecke (11003) und Schneckenrad (4) in die Lenkwelle (1) einleitet, **dadurch gekennzeichnet, dass** die Lenkwelle (1) entsprechend einem oder mehreren der vorhergehenden Ansprüche ausgebildet ist.

## Claims

1. Steering shaft (1) for a motor vehicle steering system for use with a steering assistance means (112, 114, 116), comprising an output shaft (12) and comprising a carrier (2) which is connected rotationally conjointly to the output shaft (12), on the radially outer region (20) of which carrier there is provided a worm gear toothing (3) composed of plastic for forming a worm gear (4) for connection to the steering assistance means (112, 114, 116), and which is formed in one piece with the output shaft (12),
**characterized in that**
the output shaft (12) comprises a toothing for engagement into a corresponding toothing of a toothed rack (106).

2. Steering shaft (1) according to Claim 1, **characterized in that** the output shaft (12) and the carrier (2) are produced jointly by deformation or cold extrusion.

3. Steering shaft (1) according to Claim 1 or 2, **characterized in that** the carrier (2) is of disk-shaped form the ratio of the height (h1) of the carrier (2) over the output shaft (2) to the width (b) of the carrier (2) is greater than or equal to one.

4. Steering shaft (1) according to one of the preceding claims, **characterized in that** the radially outer region (20) of the carrier (2) comprises a toothing (22), a knurling, bores (24) parallel to the shaft axis, and/or or other form-fitting structures which are designed for forming a form-fitting connection to the worm gear toothing (3).

5. Steering shaft (1) according to one of the preceding claims, **characterized in that** the worm gear toothing (3) is injection-molded onto, cast onto and/or adhesively bonded to the radially outer region (20) of the carrier (2).

6. Steering shaft (1) according to one of the preceding claims, **characterized in that** the height (h1-h2) of the radially outer region (20), which is surrounded by the worm gear toothing (3), of the carrier (2) is smaller than the height (h2) of that region of the carrier (2) which is not surrounded by the worm gear toothing (3).

7. Steering shaft (1) according to one of the preceding claims, **characterized in that** a force-fitting and/or form-fitting interface for connection to the respective articulated shaft (120) is formed integrally into the output shaft (12) .

8. Steering system for a motor vehicle comprising an electric servomotor (11001) with an output shaft (11002) to which a worm (11003) is rotatably coupled, and comprising a worm gear (4) which is coupled rotationally conjointly to a steering shaft (1) and which, in engagement with the worm (11003), forms a gear mechanism, wherein the electric servomotor (11001) introduces an assistance force or an assistance torque into the steering shaft (1) via the gear mechanism composed of worm (11003) and worm gear (4) for the purposes of assisting the steering movement, **characterized in that** the steering shaft (1) is designed in accordance with one or more of the preceding claims.

## Revendications

1. Arbre de direction (1) pour une direction de véhicule automobile, destiné à être utilisé avec un système d'assistance par force auxiliaire (112, 114, 116), comportant un arbre de sortie (12) et un support (2) relié de manière solidaire en rotation à l'arbre de sortie (12), support sur la zone (20) radialement extérieure duquel est prévue une denture de roue hélicoïdale (3) constituée de matière synthétique servant à former une roue hélicoïdale (4) destinée à être reliée au système d'assistance par force auxiliaire (112, 114, 116), et lequel support est formé d'un seul tenant avec l'arbre de sortie (12),
**caractérisé en ce que**
l'arbre de sortie (12) comprend une denture destinée à s'engrener dans une denture correspondante d'une crémaillère (106).

2. Arbre de direction (1) selon la revendication 1, **caractérisé en ce que** l'arbre de sortie (12) et le support (2) sont fabriqués conjointement par déformation ou extrusion à froid.

3. Arbre de direction (1) selon la revendication 1 ou 2, **caractérisé en ce que** le support (2) est réalisé en forme de disque le rapport de la hauteur (h1) du support (2) au-dessus de l'arbre de sortie (2) à la largeur (b) du support (2) est supérieur ou égal à un.

4. Arbre de direction (1) selon l'une quelconque des revendications précédentes, **caractérisé en ce que** la zone (20) radialement extérieure du support (2) comprend une denture (22), un moletage, des alésages (24) parallèles à l'axe d'arbre et/ou d'autres structures à complémentarité de forme, lesquelles sont conçues pour réaliser une liaison par complémentarité de forme avec la denture de roue hélicoïdale (3).

5. Arbre de direction (1) selon l'une quelconque des revendications précédentes, **caractérisé en ce que** la denture de roue hélicoïdale (3) est moulée par injection, coulée et/ou collée sur la zone (20) radialement extérieure du support (2).

6. Arbre de direction (1) selon l'une quelconque des revendications précédentes, **caractérisé en ce que** la hauteur (h1-h2) de la zone (20) radialement extérieure du support (2) entourée par la denture de roue hélicoïdale (3) est inférieure à la hauteur (h2) de la zone du support (2) non entourée par la denture de roue hélicoïdale (3).

7. Arbre de direction (1) selon l'une quelconque des revendications précédentes, **caractérisé en ce qu'**une interface de liaison par force et/ou par complémentarité de forme pour la liaison à l'arbre articulé (120) respectif est formée d'un seul tenant dans l'arbre de sortie (12).

8. Système de direction pour un véhicule automobile comportant un servomoteur électrique (11001) comprenant un arbre de sortie (11002), auquel une vis sans fin (11003) est accouplée de manière rotative, et une roue hélicoïdale (4) qui est accouplée de manière solidaire en rotation à un arbre de direction (1) et forme un engrenage lors de l'engrènement avec la vis sans fin (11003), le servomoteur électrique (11001) appliquant dans l'arbre de direction (1), par le biais de l'engrenage constitué de la vis sans fin (11003) et de la roue hélicoïdale (4), une force auxiliaire ou un couple auxiliaire pour assister le mouvement de direction, **caractérisé en ce que** l'arbre de direction (1) est réalisé conformément à l'une ou plusieurs des revendications précédentes.
